# EUROPEAN PATENT APPLICATION

(11) **EP 4 789 736 A1**
(43) Date of publication of application: **12.08.2026**
(21) Application number: 24874298.3
(22) Date of filing: 16.05.2024
(51) Int. Cl.: A63F 9/00, A63F 9/30, G06Q 50/10

(54) **GAME SYSTEM AND COMMUNICATION TERMINAL**

(30) Priority: 03.10.2023 JP 2023172199
(71) Applicant: Sega Corporation, Tokyo 141-0033 (JP)
(72) Inventor: TAMUKAI, Taro, Tokyo 141-0033 (JP); SUGIYAMA, Hayato, Tokyo 141-0033 (JP); GUNJI, Saori, Tokyo 141-0033 (JP); YAMAUCHI, Akira, Tokyo 141-0033 (JP); NAGASHIMA, Kenji, Tokyo 141-0033 (JP); NAKAYAMA, Shuhei, Tokyo 141-0033 (JP)
(74) Representative: Osha BWB
(86) International application number: PCT/JP2024/018238
(87) International publication number: WO 2025/074681

(57) **Abstract**

The present invention improves efficiency of management in a game device. A game system according to the present invention includes a reception unit that receives a plurality of types of state information of a game device from each of a plurality of game devices, and a management image generating unit that generates a management image by adding the state information of each of the plurality of game devices to a map image indicating a layout of the plurality of game devices in an arcade. When a change in display is instructed by an operator, the management image generating unit changes the state information to be displayed on the management image on the basis of the plurality of types of state information.

## Description

### TECHNICAL FIELD

The present invention relates to a game device installed in a game center or the like.

### BACKGROUND TECHNOLOGY

A variety of game devices are installed in a game center. As the number of game devices increases, the management burden of the game devices on game center employees (operators) also increases.

### CITATION LIST

### PATENT DOCUMENTS

Patent Document 1: Japanese Patent No. 5036616
Patent Document 2: Japanese Patent No. 5159414

### SUMMARY OF INVENTION

### PROBLEM TO BE SOLVED BY INVENTION

The operators have various needs regarding grasping the status of the game devices. For example, in the case of a crane game device, situations that need to be grasped include troubles such as a crane failing to operate during play or prizes running out of stock. To resolve such troubles, it is desirable for the operators to be able to quickly grasp the status.

The present invention has been completed based on the recognition of the above-described problems, and a main object of the present invention is to provide a technology for improving the efficiency of managing game devices.

### MEANS TO SOLVE THE PROBLEM

A game system according to an aspect of the present invention comprises: a reception unit that receives a plurality of types of state information of a game device from each of a plurality of game devices; and a management image generating unit that generates a management image by adding the state information of each of the plurality of game devices to a map image indicating a layout of the plurality of game devices in an arcade. When a change in display is instructed by an operator, the management image generating unit changes the state information to be displayed on the management image from among the plurality of types of state information.

A communication terminal according to an aspect of the present invention comprises: a reception unit that receives, from a game management device, a layout of a plurality of game devices in an arcade and a management image indicating first state information of each of the plurality of game devices; a display unit that displays the received management image indicating the first state information on a screen; an input unit that receives a display change instruction from an operator; and a transmission unit that notifies the game management device of a change request indicating the display change instruction. The reception unit receives, from the game device, the management image indicating the first state information of each of the plurality of game devices after the change request is transmitted, and the display unit changes the first state information displayed on the management image to second state information when a management image indicating the second state information is received.

### EFFECT OF THE INVENTION

According to the present invention, it becomes easier to improve the efficiency of managing game devices.

### BRIEF DESCRIPTION OF THE DRAWINGS

[FIG. 1] A hardware configuration diagram of a game system.
[FIG. 2] A functional block diagram of a server.
[FIG. 3] A functional block diagram of a management terminal.
[FIG. 4] An arcade interior diagram schematically showing a layout of crane game devices.
[FIG. 5] A data structure diagram of game device management information.
[FIG. 6] A display screen of the management terminal in a first display mode.
[FIG. 7] A schematic diagram showing respective first icons in the first display mode.
[FIG. 8] A display screen showing a radio signal strength of each crane game device.
[FIG. 9] A display screen of the management terminal in a second display mode.
[FIG. 10] A schematic diagram showing a second icon in the second display mode.
[FIG. 11]A schematic diagram showing respective second icons in the second display mode.

### DESCRIPTION OF THE EMBODIMENTS

First, a configuration of a game system will be described. Next, a "first display mode" and a "second display mode", which are screen display modes of a management terminal according to the present embodiment will be described in detail. In the following description, the description will be given assuming that a crane game device is one type of a game device.

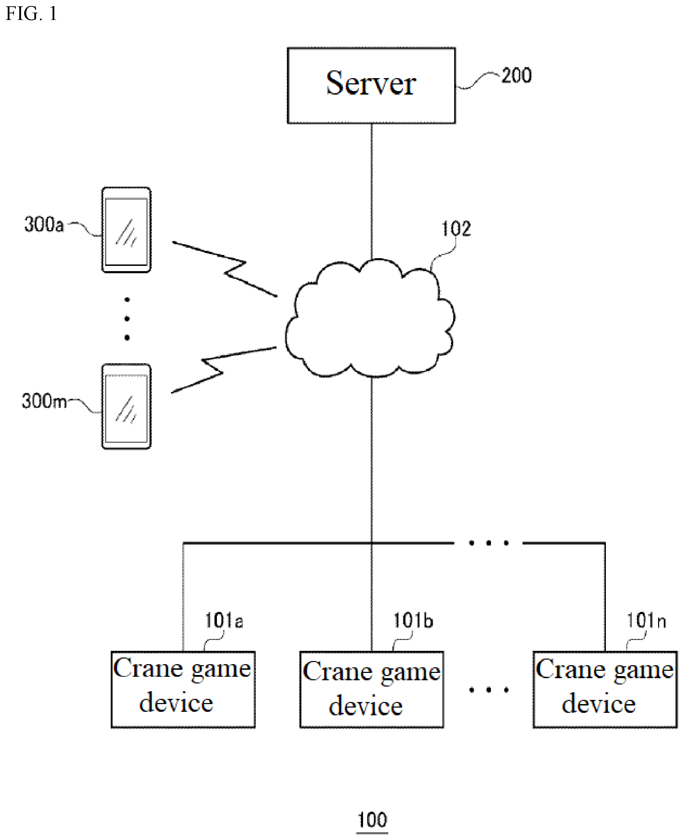

FIG. 1 is a hardware configuration diagram of a game system 100.

In the following, the description will be given assuming that the game system 100 is installed inside a certain game center. In addition, for more specific description, the present embodiment will be described assuming that the game center is located in Akihabara (hereinafter, referred to as "Akihabara arcade"). In the game system 100, a plurality of crane game devices 101a, 101b, ..., and 101n (hereinafter, when referring to the plurality of crane game devices collectively or when no particular distinction is made, the plurality of crane game devices will be referred to as a "crane game device 101") and management terminals 300a, ..., and 300m (hereinafter, when referring to the management terminals collectively or when no particular distinction is made, the management terminals will be referred to as a "management terminal 300") are connected to one server 200 (game management device) via a communication network 102. It is assumed that the communication network 102 is not a globally open communication network like the Internet, but a closed communication network (intranet) in one arcade. Furthermore, the communication network 102 of the Akihabara arcade is a wireless network, not a wired network.

A large number of crane game devices 101 installed in the Akihabara arcade form one or more groups. There are 15 crane game devices 101 installed in the Akihabara arcade. The 15 crane game devices 101 may be grouped into three groups of five game devices, or may be grouped into three groups of three game devices and three groups of two game devices. In each group, one crane game device 101 is set as a relay machine (not shown).

The crane game device 101 and the server 200 are wirelessly connected to each other via the communication network 102. The crane game device 101 transmits state information (which will be described later) to the server 200 via the communication network 102. Furthermore, the crane game device 101 and the server 200 also transmit or receive a signal (which will be described later) via the communication network 102.

The crane game device 101 serving as a relay machine is installed near the server 200 in a location with a relatively good radio signal environment. When wireless communication between the crane game device 101 and the server 200 cannot be established for some reason, the crane game device 101 transmits a game machine ID (which will be described later) and state information to the relay machine, and the relay machine transmits the information to the server 200. The "state information" is information indicating various states of the crane game device 101, such as sales and radio signal strength, and will be described in detail. The crane game device 101 serving as a relay machine has a function of relaying communication between the server 200 and the crane game device 101 other than the relay machine. The function of the relay machine may be distributed to a separate casing, and a relay-dedicated device may be prepared.

In the present embodiment, each operator has a management terminal 300. The management terminal 300 is assumed to be a tablet terminal, but may also be a smartphone or a laptop PC. In addition, the management terminal 300 is wirelessly connected to the server 200 via the communication network 102. The server 200 generates an image (management image) showing an operation status or the like of the crane game device 101 based on the state information received from the crane game device 101, and transmits the image to the management terminal 300. Each operator can check the management image on the management terminal 300 to grasp the operation status of each crane game device 101 individually.

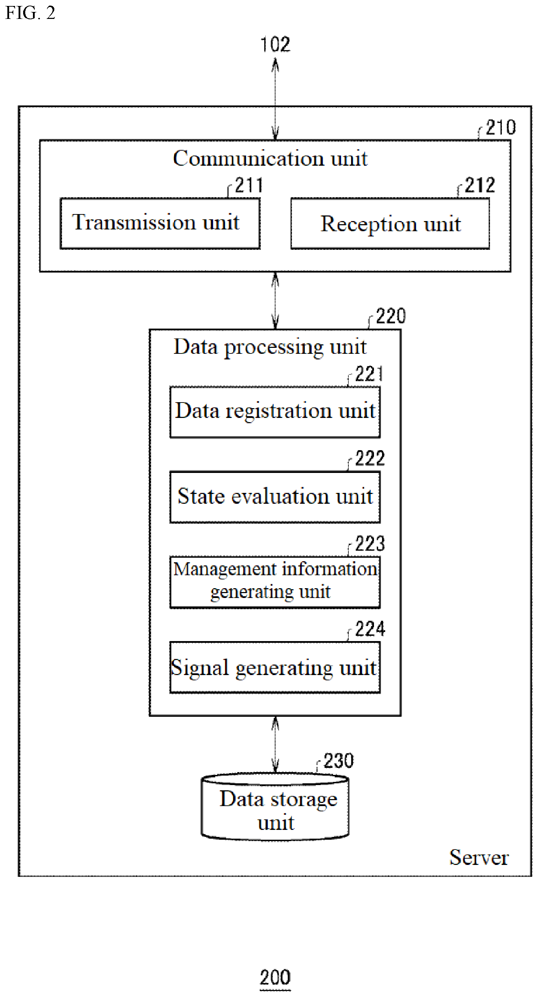

FIG. 2 is a functional block diagram of the server 200.

Each component of the server 200 is implemented by hardware, including computing units such as a central processing unit (CPU) and various co-processors, a storage device such as a memory or a storage, and wired or wireless communication lines that connect the hardware and the storage device, and software stored in the storage device and supplying processing instructions to the computing units. A computer program may be composed of a device driver, an operating system, various application programs located at higher layers than the device driver and the operating system, and a library that provides common functions to the programs. Each block, which will be be described later, represents a block of a functional unit rather than a configuration of a hardware unit.

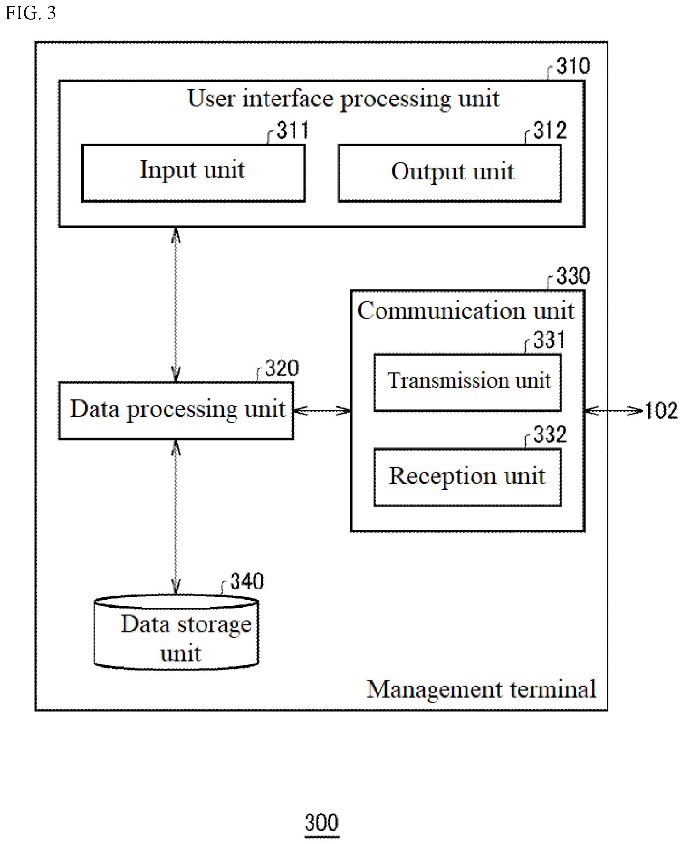

The same applies to the components of the management terminal 300 described with reference to FIG. 3.

The server 200 includes a communication unit 210, a data processing unit 220, and a data storage unit 230.

The communication unit 210 is responsible for a communication process between the crane game device 101 and the management terminal 300. The data storage unit 230 stores the state information received from the crane game device 101 and various images to be displayed on a screen of the management terminal 300. The data processing unit 220 performs various processes based on data stored in the data storage unit 230.

The communication unit 210 includes a transmission unit 211 that transmits a signal or a management image to the server 200 and the management terminal 300, and a reception unit 212 that receives the state information or the signal from the crane game device 101 and the management terminal 300.

The data processing unit 220 includes a data registration unit 221, a state evaluation unit 222, a management information generating unit 223, and a signal generating unit 224. The data registration unit 221 registers the state information received from the crane game device 101 in the data storage unit 230. The state evaluation unit 222 evaluates the sales status of the crane game device 101 based on state information such as target sales or sales received from the crane game device 101. In addition, the state evaluation unit 222 evaluates a communication state based on state information such as a radio signal strength or a loss rate (which will be described later) received from the crane game device 101. Among the state information, an index value related to the communication state, such as a radio signal strength or a loss rate, is called a "communication state value". The management information generating unit 223 generates a management image (which will be described later) based on the state information stored in the data storage unit 230. Thus, the management information generating unit 223 functions as a "management image generating unit". The signal generating unit 224 generates a signal to be transmitted to the crane game device 101.

FIG. 3 is a functional block diagram of the management terminal 300.

The management terminal 300 includes a user interface processing unit 310, a data processing unit 320, a communication unit 330, and a data storage unit 340.

The user interface processing unit 310 includes an input unit 311 that receives an input from the operator, and an output unit 312 that outputs an image and sound to the operator. The output unit 312 functions as a display unit. The input unit 311 detects operation inputs of a finger, a stylus pen, a keyboard, and a mouse (not shown). In addition, the output unit 312 performs an image output on a display and a sound output from a speaker.

The data processing unit 320 generates an instruction signal indicating the input content of the operator, which is received by the input unit 311, and instructs the communication unit 330 to transmit the instruction signal. In addition, the data processing unit 320 instructs the output unit 312 to output the management image received by the communication unit 330 from the server 200.

The communication unit 330 includes a transmission unit 331 that transmits the instruction signal to the server 200, and a reception unit 332 that receives the management image from the server 200.

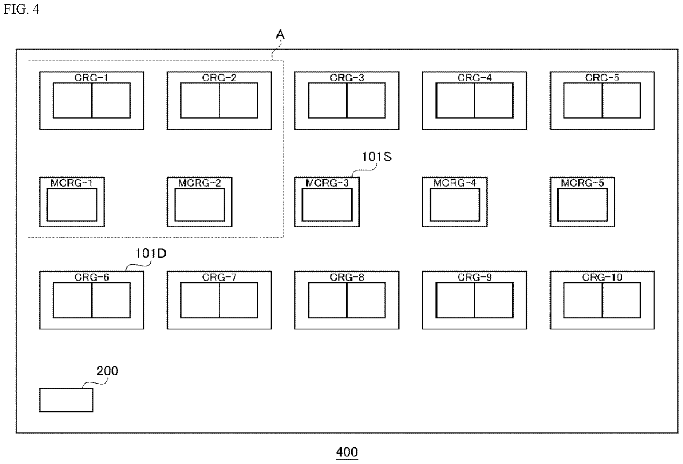

FIG. 4 is an arcade interior diagram 400 schematically showing a layout of the crane game device 101 in the Akihabara arcade.

In the Akihabara arcade, a total of 15 crane game devices 101 and servers 200 are installed on one floor. According to the arcade interior diagram 400, the Akihabara arcade is equipped with five crane game devices 101S for a single player, in which one playable booth is provided, and ten crane game devices 101D for two players, in which two playable booths are provided. The booth refers to, for example, each game machine of a single game casing including a plurality of game machines. For example, the crane game device 101D for two players includes two crane game devices such that a player 1 and a player 2 can play, respectively, which are called a booth "1P" and a booth "2P".

An ID (game machine ID) for identifying each crane game device 101 is assigned to the crane game device 101. In FIG. 4, game machine IDs MCRG-1 to MCRG-5 are assigned to the crane game devices 101S for a single player, and game machine IDs CRG-1 to CRG-10 are assigned to the crane game devices 101D for two players. The server 200 is installed in one corner of the floor. A map image (which will be described later), which is a digital image of the arcade interior diagram 400, is stored in the data storage unit 230 of the server 200. In the following description, a portion enclosed by a dotted line in the upper left of the arcade interior diagram 400 will be referred to as an "area A". The area is a display range in a map area (which will be described later) on the management image. The operator can arbitrarily set the area (display range) in the map area. In FIG. 4, the area A specified as the display range includes two crane game devices 101S for a single player and two crane game devices 101D for two players.

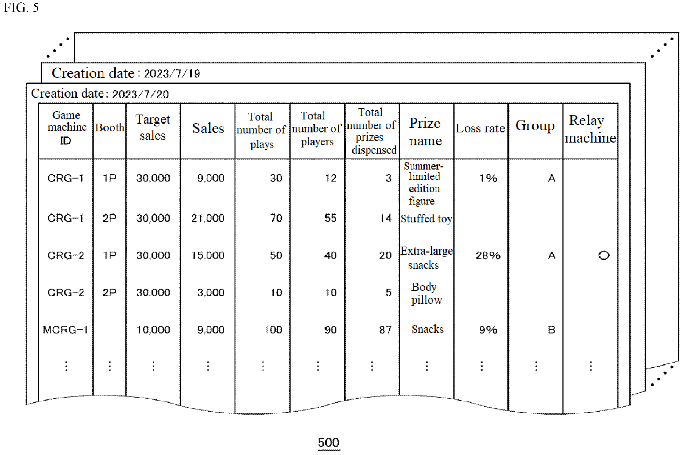

FIG. 5 is a data structure diagram of game device management information 500.

Each crane game device 101 installed in the Akihabara arcade periodically transmits its own state information to the server 200. The state information includes sales, the total number of plays, the total number of players, the total number of prizes dispensed, a prize name, radio signal strength, and the like. The state information is received by the reception unit 212 of the server 200 and registered in the game device management information 500 by the data registration unit 221.

Game device management information 500 is stored in the data storage unit 230 for each business day of the Akihabara arcade. During business hours of the Akihabara arcade, the game device management information 500 is updated every time the state information is transmitted from the crane game device 101.

The loss rate is also registered in the game device management information 500. The loss rate is a rate at which communication between the crane game device 101 and the server 200 fails (communication failure rate).

Specifically, the server 200 periodically transmits a query signal, such as ping, to each crane game device 101. More specifically, the signal generating unit 224 generates the query signal, and the transmission unit 211 periodically transmits the query signal to the crane game device 101. When the query signal is received from the server 200, each crane game device 101 transmits a signal in response to the query signal (a response signal) to the server 200. When the server 200 receives the response signal, the state evaluation unit 222 determines that the crane game device 101, which has transmitted the response signal, is available for communication. In this way, the server 200 monitors whether communication with the crane game device 101 is possible, that is, performs so-called health monitoring.

During the life-and-death monitoring, the state evaluation unit 222 calculates the loss rate. For example, it is assumed that, when the server 200 transmits the query signal to the crane game device 101 ten times, the response signal is received nine times. In this case, the state evaluation unit 222 calculates that the loss rate is 10%. In addition, the loss rate calculated in this way is also registered in the game device management information 500.

Here, the state information registered in the game device management information 500 will be described in detail.

A game machine ID of each crane game device 101 is registered in a game machine ID field. In the game device management information 500, one row corresponding to the game machine ID is provided for the crane game device 101S for a single player, and two rows are provided for the crane game device 101D for two players. In addition, in the case of the crane game device 101D for two players, a booth field in the first row is registered with "1P" as a name of a booth where the first player plays, and a booth field in the second row is registered with "2P" as a name of a booth where the second player plays.

A target sales amount for each day at each booth of the crane game device 101 is registered in a target sales field. The target sales amount is set arbitrarily by the operator and registered in the game device management information 500. For example, the operator may set an aggregation period for which the target sales amount by changing the same on a daily, weekly, or monthly basis. The actual sales amount up to the current time of the business day at each booth is registered in a sales field.

The total number of plays, the total number of players, and the number of prizes dispensed up to the current time of the business day at each booth are registered in a total-number-of-plays field, a total-number-of-players field, and a total-number-of-prizes-dispensed field, respectively. In a prize name field, a name of a prize stored in each booth is registered.

The loss rate of each crane game device 101 is registered in a loss rate field as described above. In the loss rate field, in the case of the crane game device 101D for two players, the loss rate is registered in the loss rate field only in a row where "1P" is registered in the booth field. Among the state information (communication state value) received from the crane game device 101, the radio signal strength is not registered in the game device management information 500 because only current information is displayed on the management image (details thereof will be described later).

A group name to which the crane game device 101 belongs is recorded in a group field. According to FIG. 5, the crane game devices 101D having the game machine IDs of CRG-1 and CRG-2 belong to a group A, and the crane game device 101S having the game machine ID of MCRG-1 belongs to a group B. Similarly to the game machine ID field, in the case of the crane game device 101D for two players, the group name is recorded in the group field of the first row.

In a relay machine field, a check mark (circle mark) is recorded for the crane game device 101 that is set as a relay machine in each group. In FIG. 5, the crane game device 101D having the game machine ID of CRG-2 is set as a relay machine in the group A. In the relay machine field, similarly to the game machine ID field, the check mark is recorded in the first row in the case of the crane game device 101D for two players.

Next, a "first display mode" and a "second display mode", which are two types of screen display modes in the present embodiment, will be described in detail. The "first display mode" is a mode in which the state information of the crane game device 101 is displayed for a specified period. The first display mode is a mode for analyzing data such as sales data for a predetermined period in the past. The "second display mode" is a mode in which a play status or the like of each crane game device 101 is displayed in real time. The second display mode is a mode for grasping the state of each crane game device during operation of the game center. When logging in to the management terminal 300, the operator can select whether to display the management image in the first display mode or the second display mode. In addition, when the operator is displaying the management image in one of the screen display modes, the operator can switch to the other screen display mode by pressing a switch button (not shown) on the management image. The management image generating unit 223 generates a management screen according to the specified mode.

### [First Display Mode]

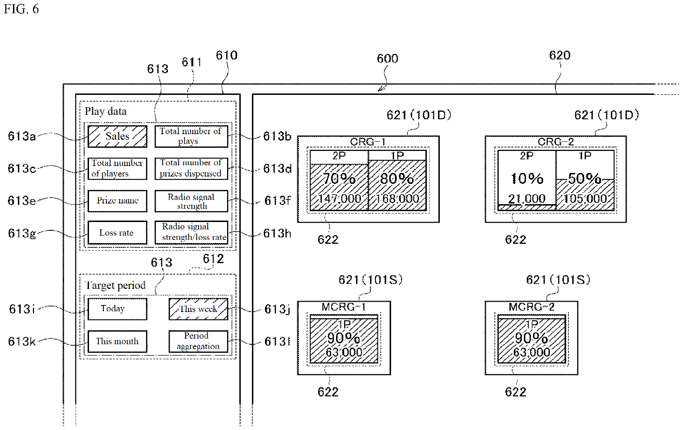

FIG. 6 is a display screen of the management terminal 300 in the first display mode.

The operator specifies an area A (see FIG. 4) as a display range. In this case, a management image 600, which reflects sales and the like at each booth of the crane game devices 101 included in the area A, is displayed on a display of the management terminal 300. In addition, the management image 600 includes a selection area 610 and a map area 620. The map area 620 is generated by reflecting the state information, which is received by the server 200 from the crane game device 101, in the map image stored in the data storage unit 230. The management information generating unit 223 generates the management image 600 by combining the map area 620 thus generated with the selection area 610.

In the map area 620 of FIG. 6, first icons 621, which represent the crane game devices 101D having the game machine IDs of CRG-1 to CRG-2 and the crane game devices 101S having the game machine IDs of MCRG-1 to MCRG-2, respectively, are displayed in the area A of FIG. 4. The first icon 621 is an object that indicates a location and a state of one crane game device 101. The game machine ID of the crane game device 101 is displayed on an upper portion of the first icon 621, and an information display area 622 is displayed on a lower portion thereof. In the case of the crane game device 101D for two players, the information display area 622 is divided into booths of"1P" and "2P." In the information display area 622, the state information stored in the game device management information 500 of the server 200 is displayed.

The selection area 610 includes a play data field 611 and a target period field 612. The play data field 611 is an area for selecting the state information (play data) of the crane game device 101 that can be displayed in the map area 620. The target period field 612 is an area for selecting a target period for displaying the state information (hereinafter referred to as a "display period"). In the play data field 611, selection buttons 613 corresponding to the state information, such as sales, the total number of plays, the total number of players, the total number of prizes dispensed, a prize name, radio signal strength, a loss rate, and radio signal strength/loss rate, are arranged. In addition, in the target period field 612, a selection button 613 corresponding to display periods such as today, this week, this month, and period aggregation are arranged. The operator selects the state information and display period to be displayed in the map area 620 using various selection buttons 613.

As described above, the operator specifies which state information the operator wants to display in the play data field 611. In addition, the operator specifies the display period using the selection button 613 in the target period field 612. For example, when the operator presses a "this week" selection button 613j, the state information for this week is set as a display target. When the operator presses the "period aggregation" selection button 613l, a period specification screen (not shown) for specifying the start date and end date for aggregating the state information on a year-month-day basis is separately displayed on the management image 600.

When a "sales" selection button 613a, a "total number of plays" selection button 613b, a "total number of players" selection button 613c, a "total number of prizes dispensed" selection button 613d, a "prize name" selection button 613e, or a "loss rate" selection button 613g is pressed, the operator specifies the display period. In this case, all buttons 613 can be pressed in the target period field 612. On the other hand, when a "radio signal strength" selection button 613f and a "radio signal strength/loss rate" selection button 613h are pressed, the operator cannot specify the display period. In this case, each selection button 613 in the target period field 612 cannot be pressed and is displayed in a grayed-out state. In this way, in either case where the "radio signal strength" selection button 613f or the "radio signal strength/loss rate" selection button 613h is pressed, the display period is not set and the current radio signal strength is always displayed on the management image 600. The "radio signal strength" selection button 613f and the "radio signal strength/loss rate" selection button 613h will be described in detail later.

The operator presses the "prize name" selection button 613e in the play data field 611, and presses the selection button 613 in the target period field. In this case, the latest prize name within the display period is displayed in the information display area 622 on the map area 620. For example, it is assumed that, on August 11, 2023, while the "prize name" is selected in the play data field, the operator presses the "period aggregation" selection button 613l. The time specification screen (not shown) is displayed on the management image 600, and the operator specifies the start date as "April 1, 2023" and the end date as "July 20, 2023". In this case, in the map area 620, the names of the prizes that have been stored in the respective booths of the crane game devices 101 as of the end of business on July 20, 2023, that is, at the end day of the display period are displayed.

FIG. 6 shows the management image 600 when the operator presses the "sales" selection button 613a and the "this week" selection button 613j in the selection area 610. In this case, in the map area 620, the sales from the first business day for this week to the current time at each crane game device 101 for each booth is displayed.

For example, in the upper left side of the map area 620 showing the area A, sales and the like for this week for the crane game device 101D for two players, which has the game machine ID of "CRG-1" (hereinafter, referred to as a "crane game device 101D (CRG-1)") are displayed. It is assumed that a target sales amount for this week at each booth of the crane game device 101D (CRG-1) has been set to 210,000 yen. In addition, as of the current time, sales of the booth "1P" have reached 168,000 yen, while sales of the booth "2P" have reached 147,000 yen. In this case, a current sales amount and a sales achievement rate (a ratio of the sales at the current time to the target sales amount) are displayed in the information display area 622. Specifically, the sales of 168,000 yen and the sales achievement rate of 80% are displayed in the booth "1P", and the sales of 147,000 yen and the sales achievement rate of 70% are displayed in the booth "2P".

Furthermore, in the information display area 622, each booth is colored in a gauge format according to the sales achievement rate. That is, the information display area 622 of each booth is not colored when the sales achievement rate is 0%. The information display area 622 is gradually colored from the bottom up in conjunction with an increase in the sales achievement rate, and is completely recolored when the sales achievement rate reaches 100%. The gauge display allows the operator to intuitively grasp the sales achievement rate of each of the plurality of crane game devices 101.

The operator can freely change the display range of the crane game device 101 in the map area 620. In FIG. 6, one section (area A) of the arcade interior diagram 400 is displayed in an enlarged manner, but the operator can display any range within the arcade interior diagram 400 by moving a slider (not shown) of a scroll bar of the management image 600 or by pinching in and out (zooming in or out by pinching two fingers together on the screen) the map area 620.

The management image 600 is generated by the management information generating unit 223 of the server 200. Specifically, the operator presses, in the play data field 611 and the target period field 612, the selection buttons 613 corresponding to the state information and the display period to be displayed on the management image 600. In this case, the data processing unit 320 of the management terminal 300 generates an instruction signal specifying the pressed selection button 613. The generated instruction signal is transmitted by the transmission unit 331.

When the server 200 receives the instruction signal from the management terminal 300, the management information generating unit 223 acquires state information corresponding to content of the instruction signal from the game device management information 500. The management information generating unit 223 reflects the acquired state information on the map image stored in the data storage unit 230 and generates the map area 620. In addition, the management information generating unit 223 generates the management image 600 by combining the map area 620 with the selection area 610 that is also stored in the data storage unit 230.

For example, it is assumed that the operator wants to check the total number of plays for this month in each booth of the crane game device 101 in the Akihabara arcade. In this case, the operator presses, on the selection area 610, the "total number of plays" selection button 613b in the play data field and the "this month" selection button 613k in the target period field.

The input unit 311 of the management terminal 300 receives an input from the "total number of plays" selection button 613b and the "this month" selection button 613k. In this case, the data processing unit 220 generates an instruction signal to instruct generation of the management image 600 that displays the total number of plays for this month at each booth of the crane game device 101 in the Akihabara arcade. The transmission unit 331 transmits the instruction signal to the server 200.

The reception unit 212 of the server 200 receives the instruction signal from the management terminal 300. In this case, the management information generating unit 223 acquires the "total number of plays" of each crane game device 101 in the Akihabara arcade from the game device management information 500 stored in the data storage unit 230, for a period from the first business day of this month onward. The management information generating unit 223 reflects the acquired information on "the total number of plays" on the map image and generates the map area 620. In addition, the management information generating unit 223 acquires an image of the selection area 610 from the data storage unit 230. The management information generating unit 223 generates the management image 600 in which the "total number of plays" of "this month" is set as a display target (hereinafter, referred to as an "updated image") by combining the map area 620 with the selection area 610. The generated updated image is transmitted to the management terminal 300 by the transmission unit 211.

When the reception unit 332 of the management terminal 300 receives the updated image, the data processing unit 320 instructs the output unit 312 to output the updated image. The output unit 312 displays the updated image, and the operator can check the "total number of plays" of "this month" for each crane game device 101 in the Akihabara arcade.

In this way, when there is state information that the operator wants to check regarding each crane game device 101, the operator only needs to press the selection button 613 in the selection area 610 that corresponds to the state information and display period that the operator wants to check. The management image 600 displays the updated image based on the state information and display period of the selection button 613 pressed by the operator. In this case, in the updated image, the updated state information is reflected in the information display areas 622 of all the crane game devices 101. That is, when the operator presses the selection button 613 corresponding to the state information that the operator wants to check, the management terminal 300 switches and displays the management image 600 that reflects the updated state information about all the crane game devices 101.

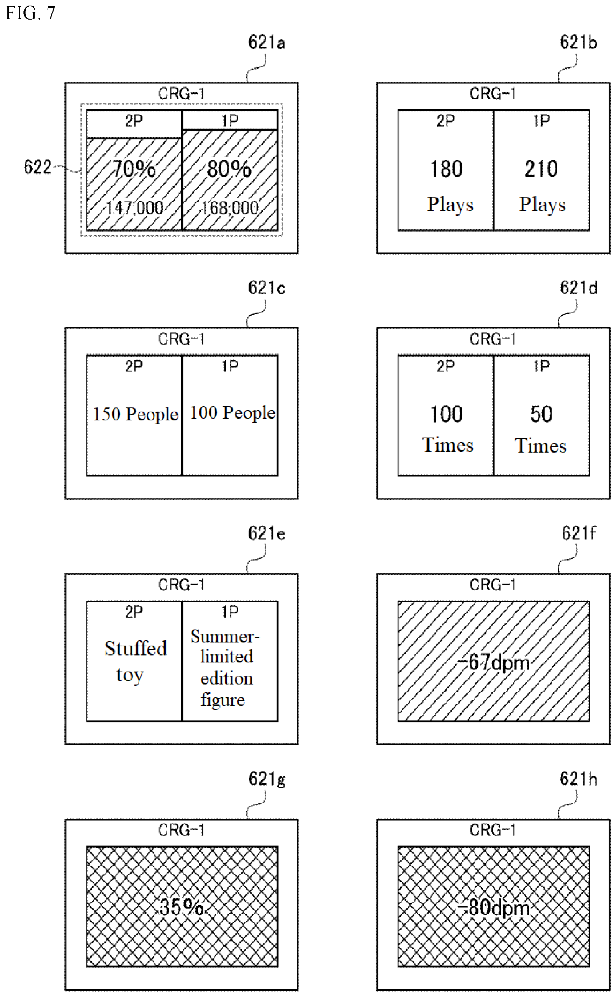

FIG. 7 is a schematic diagram showing the respective first icons 621 in the first display mode.

Here, the crane game device 101D (CRG-1) will be described as an example. In addition, it is assumed that the "this week" selection button 613j has already been pressed in the target period field 612.

When the "sales" selection button 613a is pressed, a first icon 621a is displayed on the map area 620. As described above, the first icon 621a displays the sales for this week and the sales achievement rate for each booth. In addition, in the information display area 622, each booth is colored in a gauge format according to the sales achievement rate. The sales achievement rate is calculated by the state evaluation unit 222 based on the information about the "target sales" and "sales" in the game device management information 500. When the "sales" selection button 613a is pressed, the management information generating unit 223 reflects the calculated sales achievement rate in the management image 600 along with the sales. A display of the first icon 621a is the same as a display of the first icon 621 of the crane game device 101D (CRG-1) in FIG. 6.

When the "total number of plays" selection button 613b is pressed, the display is changed from the first icon 621a to a first icon 621b. A cumulative number of plays at each booth is displayed in the information display area 622. The first icon 621b in FIG. 7 indicates that 210 plays have been performed at the booth "1P" and 180 plays have been performed at the booth "2P" in the crane game device 101D (CRG-1) for this week.

When the "total number of players" selection button 613c is pressed, a first icon 621c is displayed. A cumulative number of people who played at each booth is displayed in the information display area 622. The first icon 621c in FIG. 7 shows that 100 people played at the booth "1P" and 150 people played at the booth "2P" in the crane game device 101D (CRG-1) for this week.

When the "total number of prizes dispensed " selection button 613d is pressed, a first icon 621d is displayed. The number of prizes dispensed at each booth, that is, a cumulative number of acquiring the prize is displayed in the information display area 622. The first icon 621d in FIG. 7 indicates that the prize has been dispensed 50 times from the booth "1P" and 100 times from the booth "2P" in the crane game device 101D (CRG-1) for this week.

When the "prize name" selection button 613e is pressed, a first icon 621e is displayed. The latest names of prizes stored in each booth during the display period is displayed in the information display area 622. According to the first icon 621e, among the prizes stored this week in the crane game device 101D (CRG-1), the most recently stored prize, that is, the prize that is currently stored is a summer-limited edition figure for the booth "1P" and a stuffed toy for the booth "2P".

It is assumed that the operator presses the selection buttons 613a to 613e in the play data field 611 and checks that the first icons 621a to 621e are displayed. According to the first icons 621a and 621e, the booth "1P", in which the summer-limited edition figure is stored, has slightly higher sales and sales achievement rate for this week compared to the booth "2P" in which the stuffed toy is stored. In addition, according to the first icons 621b to 621d, the total number of plays is higher for the booth "1P", but the total number of players and the total number of prizes dispensed are higher for the booth "2P". That is, it can be seen that the same person plays more frequently in the booth "1P" than in the booth "2P", and the number of prizes dispensed is lower.

Based on the above information, for example, the operator can determine that when a turnover rate of the booth "1P" increases and the number of prizes dispensed also increases, the sales of the booth "1P" will further increase. Based on the determination, the operator will take measures such as increasing the number of summer-limited edition figures stored in the booth "1P" or placing the summer-limited edition figures in a location where the summer-limited edition figures are easy to grab with a crane. This can increase a prize acquisition rate of the player, and is expected to improve the turnover rate of the booth "1P".

When the "radio signal strength" selection button 613f is pressed, a first icon 621f is displayed. In this case, in the information display area 622, the current radio signal strength of the crane game device 101D (CRG-1) is displayed.

Since the radio signal strength is information related to a casing of the crane game device 101, the information display area 622 is not divided per booth. Furthermore, when the "radio signal strength" selection button 613f is pressed, the information display area 622 is colored in a heat map format. That is, the color applied to the information display area 622 changes depending on the strength of the radio signal. For example, when the radio signal strength is strong, no color is applied, but as the radio signal strength weakens, the color changes to yellow, orange, and red.

The coloring of the information display area 622 is performed by the management information generating unit 223. When the "radio signal strength" selection button 613f is pressed in the selection area 610, the state evaluation unit 222 of the server 200 acquires the radio signal strength from the state information received from the crane game device 101. The state evaluation unit 222 evaluates the communication state based on the acquired radio signal strength and in accordance with predetermined determination criteria. For example, the determination criteria are defined such that -60 dbm to -79 dbm is regarded as good, -80 dbm to -89 dbm is regarded as poor, and -90 dbm or less is regarded as communication unavailable. When the map area 620 is generated, the management information generating unit 223 colors the information display area 622 based on the evaluation of the state evaluation unit 222. For example, the management information generating unit 223 colors the information display area 622 yellow if the evaluation of the communication state is good, orange if the evaluation of the communication state is poor, and red if the communication is unavailable.

When the "loss rate" selection button 613g is pressed, a first icon 621g is displayed. In the information display area 622, the loss rate of the crane game device 101 is displayed. As described above, the loss rate is calculated by the state evaluation unit 222. When the "today" selection button 613i is pressed in the target period field 612, the state evaluation unit 222 acquires the current loss rate from the game device management information 500. It is assumed that any one of the "this week" selection button 613j, the "this month" selection button 613k, and the "period aggregation" selection button 613l is pressed in the target period field 612. In this case, the state evaluation unit 222 acquires all the loss rates of the corresponding display period from the game device management information 500, and calculates an average value thereof. The management information generating unit 223 applies the loss rate thus acquired and calculated to the map area 620.

Similarly to when the "radio signal strength" selection button 613f is pressed, the loss rate also becomes information about the casing of the crane game device 101. Therefore, the information display area 622 is not divided per booth, and the information display area 622 is colored in a heat map format. For example, when the loss rate is low, no color is applied, but as the loss rate increases, the color changes to yellow, orange, and red.

Even in this case, the coloring of the information display area 622 is performed by the management information generating unit 223. When the "loss rate" selection button 613g is pressed in the selection area 610, the state evaluation unit 222 of the server 200 acquires the loss rate from the game device management information 500. The state evaluation unit 222 evaluates the communication state based on the acquired loss rate and in accordance with predetermined determination criteria. For example, the determination criteria are defined such that 10% to 20% is regarded as caution, 21% to 40% is regarded as warning, and 41% or greater is regarded as inspection required. When the map area 620 is generated, the management information generating unit 223 colors the information display area 622 based on the evaluation of the state evaluation unit 222. For example, the management information generating unit 223 colors the information display area 622 yellow if the evaluation of the communication state is caution, orange if the evaluation of the communication state is warning, and red if the inspection is required.

When the "radio signal strength/loss rate" selection button 613h is pressed, a first icon 621h is displayed. In the information display area 622, the current radio signal strength of the crane game device 101 and the loss rate corresponding to the display period are displayed. In this case, the radio signal strength is output as a numerical value, but the loss rate is displayed in a heat map format in which the information display area 622 is colored. Therefore, for example, even if the radio signal strength is -60 dBm, if the "this week" selection button 613j is pressed and the loss rate for this week is 9%, the information display area 622 may not be colored.

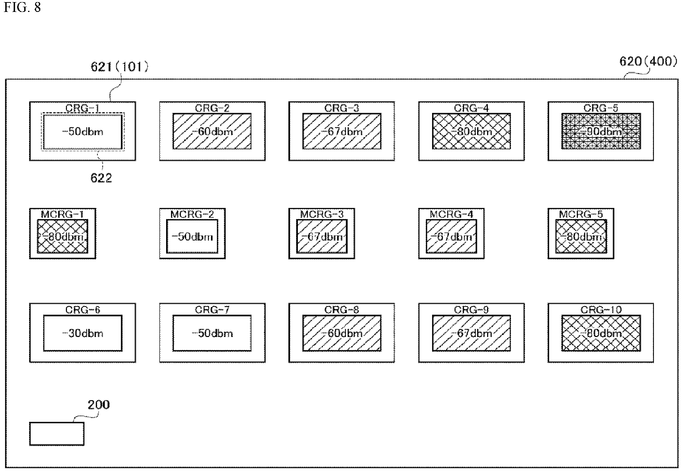

FIG. 8 is a management image 600 showing a radio signal strength of each crane game device 101. Here, a scene is assumed in which the operator presses the "radio signal strength" selection button 613f in the play data field 611 within the selection area 610, and displays the entire floor shown in the arcade interior diagram 400 in the map area 620.

As shown in FIG. 8, basically, the crane game device 101 closer to the server 200 has a stronger radio signal strength, while the crane game device 101 farther from the server 200 has a weaker radio signal strength. In addition, the color applied to the information display area 622 of the first icon 621 also changes in accordance with the radio signal strength of the crane game device 101. That is, in the case of FIG. 8, the crane game device 101 closer to the server 200 (with stronger radio signal strength) has the same color applied to the information display area 622. In addition, the crane game device 101 farther from the server 200 (with weaker radio signal strength) has the same color applied to the information display area 622, which is different from the color of the crane game device 101 closer to the server 200.

However, the crane game device 101S for a single player, which has the game machine ID of MCRG-1, has a weak radio signal strength, even though the crane game device 101S for a single player is close to the server 200. Possible reasons for the weak radio signal strength include radio signal blockage by the crane game device 101D having the game machine ID of CRG-6, or interference with radio signals from other crane game devices 101. In this way, by checking the radio signal strength of each crane game device 101 on the management image 600, the operator can recognize that a decrease in radio signal strength is occurring at an unexpected location. The operator can use the information as a reference for creating a layout that improves the radio signal strength of all the crane game devices 101.

### [Second Display Mode]

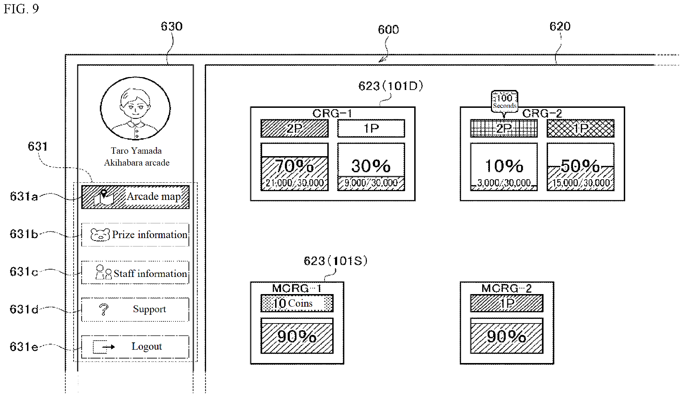

FIG. 9 is a management image 600 of the management terminal 300 in the second display mode. As described above, in the second display mode, the management image 600 displays a play status and the like in real time.

The management image 600, which reflects the sales and the like at each booth of the crane game devices 101 in an area A, is displayed on a display of the management terminal 300. In addition, the management image 600 includes a menu area 630 and a map area 620. Similarly to the first display mode, the management information generating unit 223 generates the management image 600 by combining the map area 620 with the menu area 630.

In the menu area 630, an icon representing an operator currently using the management terminal 300, a name, and an arcade to which the operator belongs are displayed. In FIG. 9, for an operator named "Taro Yamada" who works at the Akihabara arcade, the name, the arcade to which the operator belongs, and a facial photograph of " Taro Yamada" as an icon are displayed in the menu area 630. In addition, in the menu area 630, options 631 for displaying "prize information," "staff information," and "support" are displayed. When the operator selects a "prize information" option 631b, the operator can check a list of prizes to be stocked at the Akihabara arcade in the future. Similarly, when the operator selects a "staff information" option 631c, the operator can check a list of operators working at the Akihabara arcade. When the operator selects a "support" option 631d, the operator can check an operation manual of the game devices installed at the Akihabara arcade. To complete the display of the management image 600, the operator may simply select a "logout" option 631e. In order to display the play status and the like at each booth of the crane game device 101 in real time on the map area 620, the operator may select an "arcade map" option 631a.

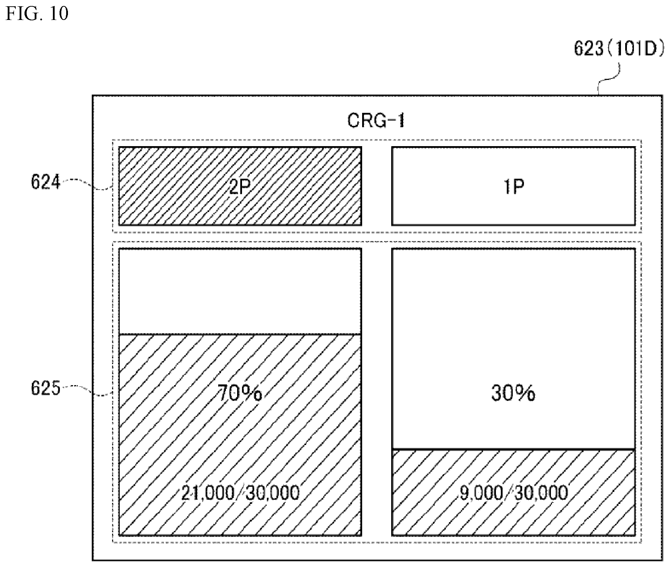

FIG. 10 is a schematic diagram showing a second icon 623 in the second display mode.

Here, the second icon 623 representing the crane game device 101D (CRG-1) will be described as an example. The second icon 623 is divided into a first information display area 624 and a second information display area 625. The first information display area 624 displays play information in a format where a booth name is colored. The "play information" refers to information that indicates a real-time play status or the like at the booth of the crane game device 101. The second information display area 625 displays state information such as the sales achievement rate or the total number of plays.

The coloring of the first information display area 624 is performed by the management information generating unit 223. Specifically, each crane game device 101 transmits the play information to the server 200 at predetermined time intervals. The play information includes types such as unplayed, in play, play completed, multiple coins, keep, prize dispensed, and error. The management information generating unit 223 of the server 200 generates the map area 620 by coloring the first information display area 624 with a specific color associated with the received play information.

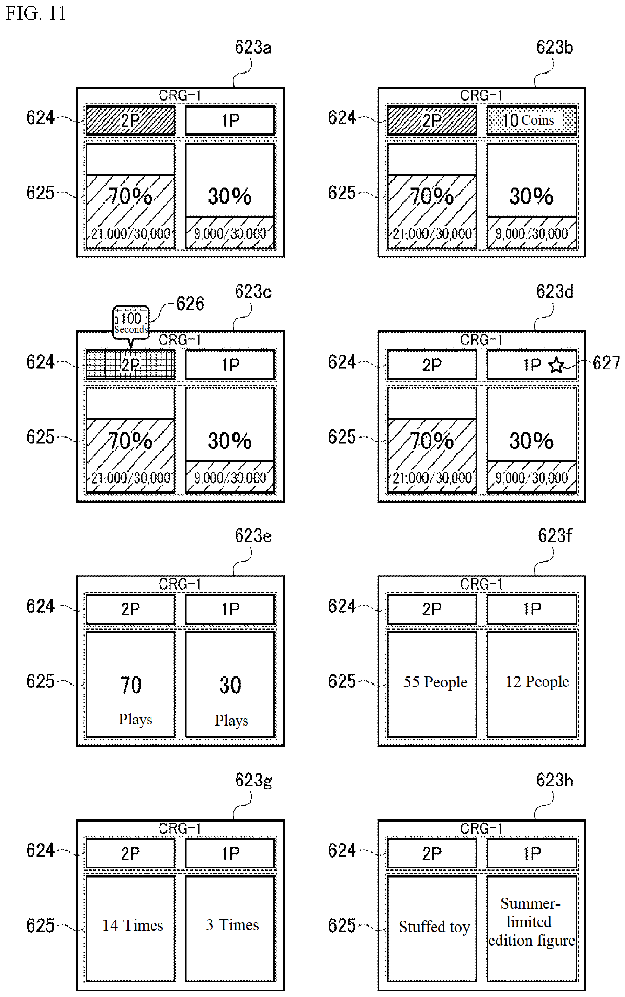

FIG. 11 is a schematic diagram showing respective second icons 623 in the second display mode. Here, the crane game device 101D (CRG-1) will be described as an example.

In a second icon 623a, the first information display area 624 is colored with a color corresponding to the play information of each booth, and the sales and sales achievement rate of each booth are shown in the second information display area 625.

The crane game device 101D (CRG-1) transmits, to the server 200, that the play information of the booth "1P" is "unplayed" and the play information of the booth "2P" is "in play". That is, currently, no one is playing at the booth "1P", and the play is being performed at the booth "2P". Therefore, as in the second icon 623a, the management information generating unit 223 does not color the booth "1P" in the first information display area 624, but colors the booth "2P". When the play at the booth "2P" is completed, the crane game device 101D (CRG-1) transmits the play information "play completed" to the server 200. Therefore, the management information generating unit 223 colors the first information display area 624 with a color different from that used when the play information is "in play". In practice, the first information display area 624 is colored light blue when the play information is "in play", and orange when the play information is "play completed".

In the present embodiment, a scene is assumed in which the player is forced to temporarily leave the crane game device 101 during play for reasons such as changing money. In this case, the player can place the crane game device 101 in an occupied state for a predetermined period of time by pressing a keep button (not shown) attached to the casing of the crane game device 101.

For example, it is assumed that the player playing at the booth "2P" presses the keep button of the crane game device 101. In this case, the crane game device 101D (CRG-1) transmits the play information "keep" to the server 200. The management information generating unit 223 colors the first information display area 624 with a color corresponding to the play information "keep". In practice, the first information display area 624 is colored yellow when the play information is "keep".

When a trouble occurs during play, such as the crane stopping operation or the prize stock being depleted, the crane game device 101D (CRG-1) transmits the play information "error" to the server 200. The management information generating unit 223 colors the first information display area 624 with a color corresponding to the play information "error". In practice, the first information display area 624 is colored red when the play information is "error". It is assumed that the play information "error" is transmitted from the crane game device 101 to the server 200, in other words, the first information display area 624 is colored with a color corresponding to the play information "error". In this case, the operator recognizes that some abnormality has occurred in the crane game device 101 and can rush to the booth immediately. As for coloring relating to the play information, a part or the whole of an object such as an icon or a booth may be colored, and this also includes a coloring area around the icon or booth or adding an icon indicating the content of the play information.

In the second icon 623a, the sales achievement rate as well as the sales amount are displayed together with the target sales amount in the second information display area 625. For example, it is assumed that the target sales amount of the booth "2" for today is set to 30,000 yen, and that the booth "2" has achieved 21,000 yen in sales at the current time. In this case, in the second information display area 625, the target sales amount and the sales amount in a format of "21,000/30,000". In addition, similarly to the first display mode, the second information display area 625 is colored in a gauge format according to the sales achievement rate.

Similarly to the first display mode, even in the second display mode, the operator can freely change the display range of the crane game device 101 on the map area 620. In the second display mode, when the display range of the crane game device 101 in the map area 620 is expanded to a predetermined criterion, the second icon 623 is displayed in a reduced size. Accordingly, the second information display area 625 is also displayed in a reduced size. In this case, in the second information display area 625, the sales amount or the sales achievement rate is not displayed, rather, only coloring corresponding to the sales achievement rate is performed in a gauge format.

The second icon 623b indicates that the player playing at the booth "1P" has inserted 10 coins. The crane game device 101 has a single mode in which only one coin is inserted to play, and a multi-mode in which multiple coins are inserted at once and one player plays continuously. When the player inserts multiple coins into the crane game device 101 at once to play in the multi-mode, the crane game device 101D (CRG-1) transmits the play information "multiple coins" to the server 200. The management information generating unit 223 colors the first information display area 624 with a color corresponding to the play information "multiple coins". In this case, the management information generating unit 223 generates the management image 600 such that the first information display area 624 alternately displays the booth name and the number of remaining coins (number of unplayed times) by switching the same at predetermined time intervals. That is, the second icon 623b alternately displays "1P" and "10 coins" by switching the same at predetermined time intervals. In practice, the first information display area 624 is colored purple when the play information is "multiple coins".

For example, it is assumed that a state where the play information is "multiple coins" frequently occurs at the same booth. That is, it is assumed that the first information display area 624 is frequently colored with the color corresponding to "multiple coins". In this case, the operator can recognize that there is a player who absolutely wants to acquire the prize. In addition, at the same time, the operator can also recognize that the same user frequently occupies the same booth for a long period of time. Therefore, based on the information, the operator can take measures such as moving the prizes to a position where the players can easily acquire the prizes, or adding more booths to store the prizes and dispersing the players.

The second icon 623c indicates that 100 seconds have elapsed since the prize has been dispensed at the booth "2P". When the player wins a prize, that is, when the prize is dispensed from the booth, the crane game device 101D (CRG-1) transmits play information "prize dispensed" to the server 200. Therefore, the management information generating unit 223 colors the first information display area 624 with a color corresponding to the play information "prize dispensed". In practice, the first information display area 624 is colored green when the play information is "prize dispensed".

When the play information "prize dispensed" is transmitted from the crane game device 101 to the server 200, the management information generating unit 223 adds a counter 626 to a top of the first information display area 624, which is colored with the color corresponding to the play information "prize dispensed". The counter 626 displays a time that has elapsed since the prize was dispensed in real time.

For example, it is assumed that, in the map area 620, the first information display area 624 of the booth '2P' of the crane game device 101D (CRG-1) is colored with a color (green) corresponding to the play information "prize dispensed", and that the counter shows 600 seconds. In addition, it is assumed that all the crane game devices 101 surrounding the booth "2P" of the crane game device 101D (CRG-1) are all "in play". That is, it is assumed that although all the surrounding crane game devices 101 are in play, only the booth "2P" of the crane game device 101D (CRG-1) has not been played for 10 minutes. From the situation, the operator can infer that some kind of trouble, though not fatal, is occurring at booth "2P" of the crane game device 101D (CRG-1). For example, it can be inferred that, after a plurality of plays has been performed, the prize has slipped into a position where the crane cannot grab the prize, resulting in a situation where no one can play. Based on the inference, the operator rushes to the crane game device 101D (CRG-1) and checks the state of the device.

In this way, the counter 626 can be used as one of criteria for the operator to rush to the crane game device 101 and take measures. Based on such features, even when the play information "error" is transmitted from the crane game device 101, the management information generating unit 223 may add the counter 626 on the first information display area 624.

In the second icon 623d, a marker 627 is attached to the first information display area 624 of the booth "1P". The operator can set the marker 627 for the crane game device 101 or the booth (specified model) that needs to be given special attention, for example, because of a high failure frequency, a fast pace of prize acquisition, or prizes being stored and heavily promoted by the arcade. In addition, the marker 627 is colored in stages, such as gold, silver, and bronze. The operator may set markers 627 of different colors in the first information display area 624 according to the priority of attention or the like.

Similarly to the first display mode, the second information display areas 625 of the second icons 623e to 623h display the state information such as the total number of plays, the total number of players, the total number of prizes dispensed, and the prize name. The information can be switched and displayed by the operator selecting from a pull-down menu (not shown) on the management image 600.

### [Summary]

Hereinabove, the game system 100 according to the present embodiment has been described.

In the present embodiment, it is assumed that a large number of crane game devices 101 are managed in a game center where the crane game devices 101 are installed. An operator at the game center where a large number of crane game devices 101 are installed tends to have a hard time grasping the status of each individual crane game device 101. For example, in the crane game device 101, it is assumed that situations may occur in which the crane suddenly ceases to operate or the prize stock of the crane game device 101 becomes depleted. In such a situation, as the number of crane game devices 101 held increases, it becomes more laborious for the operator to grasp the information.

Therefore, in the present embodiment, each crane game device 101 transmits, to the server 200 (game management device) at predetermined time intervals, the state information such as sales, total number of plays, total number of players, total number of prizes dispensed, and radio signal strength. In addition, each crane game device 101 also transmits play information indicating the real-time play status and the like, to the server 200. The server 200 transmits the management image 600 reflecting the information to the management terminal 300 held by the operator. In this manner, the operator can grasp, at a glance, the state information or play information of each crane game device 101 from the management terminal 300. Furthermore, the operator can check the state information while switching the management image 600 by pressing the selection button 613 on the management image 300 corresponding to the state information that the operator wants to check. By using such a method, the efficiency of management in the crane game device 101 can be improved.

In the present embodiment, the operator can check the sales and sales achievement rate of each crane game device 101 on the management terminal 300. The operator can adjust the sales for each crane game device 101 by changing the settings and services for each crane game device 101 and changing the layout based on the sales and the sales achievement rate.

In the present embodiment, the operator can check the total number of plays and the total number of prizes dispensed for each crane game device 101 during the display period on the management terminal 300. That is, the operator can grasp a ratio between revenue generated from plays and expenditure caused by prize payouts (business efficiency) within a specified period. Based on the ratio, the operator can determine the type and quantity of prizes to be stored in the crane game device 101.

In the present embodiment, the operator can check, by the counter 626 displayed on the management terminal 300, the elapsed time after a prize has been acquired for each crane game device 101, that is, a non-operation time (non-revenue time). When the non-operation time is long, the operator can infer that some kind of trouble is occurring with the crane game device 101. For example, possible troubles include a prize getting stuck in a prize outlet, people crowding in front of the crane game device 101, or the crane game device 101 being so dirty and therefore unplayable. By checking the non-operation time, the operator can easily determine criteria for visually checking the crane game device 101, and can respond quickly to any problems.

In the present embodiment, on the management terminal 300, the operator can attach the marker 627 to the crane game device 101 for which the operator wants to preferentially check the state information or the play information. For example, the operator places the marker 627 on the crane game device 101 that has been installed for a long period of time or that frequently breaks down. Thus, the operator can recognize that the crane game device 101 marked with the marker 627 need to be checked preferentially during patrol. Alternatively, by attaching the marker 627 to the crane game device 101 in which a new prize has been introduced, the operator can preferentially check the sales or operation rate and grasp whether the prize is popular or not.

In the present embodiment, the operator can check, on the management terminal 300, the communication state value such as the radio signal strength and loss rate of each crane game device 101 in a centralized manner in a heat map format. The crane game device 101 needs to be installed at a location where the crane game device 101 can communicate wirelessly with the server 200 that manages the state information or the play information. For example, generally, the radio signal strength is strong at a location close to the server 200 and weak at a location farther away. However, even at a location close to the server 200, the radio signal strength may be weakened due to reasons such as the presence of another crane game device 101 between the server 200 and the device or interference caused by radio signals emitted by other crane game devices 101. The operator can examine an optimal layout of the crane game devices 101 and the server 200 by checking the communication state value for each crane game device 101 on the management terminal 300, such that the radio signal strength is not weakened.

The present invention is not limited to the above-described embodiment or the modified example, and the components can be modified and embodied without departing from the spirit and scope of the present invention. Various inventions may be formed by appropriately combining a plurality of components described in the above-described embodiment or the modified example. In addition, some of the components shown in the above-described embodiment and the modified example may be deleted.

### [Modified Example]

In the present embodiment, it has been explained that the operator can check the state information or play information transmitted from the crane game device 101 to the server 200 by using the management image 600 generated by the management information generating unit 223. As the modified example, the management information generating unit 223 may generate the state information or play information, which is transmitted from the crane game device 101 to the server 200, as sound. The sound may be output from a speaker of the management terminal 300.

In the present embodiment, it has been described that the loss rate is calculated by the state evaluation unit 222 of the server 200. As the modified example, the loss rate may be calculated by the crane game device 101 and transmitted to the server 200. For example, it is assumed that the crane game device 101 transmits a response signal to the server 200 ten times. It is assumed that the crane game device 101 receives a query signal from the server 200 nine times while transmitting the response signal ten times. In this case, the crane game device 101 may calculate that the loss rate is 90%.

In the present embodiment, it has been described that the server 200 receives the state information and the play information from the crane game device 101, and the management information generating unit 223 creates the management image 600 and transmits the management image 600 to the management terminal 300. As the modified example, the management terminal 300 may receive the state information and play information from the server 200, and the data processing unit 320 of the management terminal 300 may generate the management image 600. For example, the map image is stored in the data storage unit 340 of the management terminal 300. The management terminal 300 receives the state information or the play information and an image of the selection area 610 or the menu area 630 from the server 200. The data processing unit 320 generates the map area 620 by reflecting the state information or the play information on the map image stored in the data storage unit 340. In addition, the data processing unit 320 may generate the management image 600 by combining the map area 620 with the selection area 610 or the menu area 630.

Alternatively, the management terminal 300 holds the map image and the image of the selection area 610 or the menu area 630. The server 200 transmits only the state information or the play information. The data processing unit 320 of the management terminal 300 reflects the state information or the play information on the map image. The data processing unit 320 may generate the management image 600 by combining the image of the selection area 610 or the menu area 630. That is, the server 200 may function as a database that stores the state information and the play information.

In the present embodiment, the game device has been described as a crane game device, but as the modified example, the game device may be an arcade game device, a pachinko machine, a slot machine, a medal game, or the like. For example, in the arcade game device, the management image 600 may be able to check the game play time, the number of continues, the number of trading cards printed, the results of competitive play, and the like.

The management method according to the present embodiment may be applied to devices other than the game devices. For example, in a restaurant, a management image 600 reflecting an ordered item or a waiting time for each table may be generated, and a staff member may be allowed to check the management image 600 on the management terminal 300. In addition, in a parking lot or a bicycle parking area, a management image 600 reflecting a parking time for each parking space may be generated, and a manager of the parking lot or bicycle parking area may be allowed to check the management image 600 on the management terminal 300. According to this method, for example, a manager can recognize a vehicle that has been parked for an unreasonably long time by looking at the management image 600.

In the present embodiment, the plurality of crane game devices 101 and the management terminal 300 are wirelessly connected to one server 200 installed in the Akihabara arcade via a communication network 102. Although it has been described in the above-described embodiment that the communication network 102 is assumed to be a closed communication network (intranet) within one arcade, and the server 200 includes the communication unit 210, the data processing unit 220, and the data storage unit 230, the server 200 may be connected to the Internet, and the crane game devices 101 may be connected to each other via the intranet, as the modified example.

More specifically, the server 200 includes an in-arcade server and an application server or a database (data storage unit 230). In addition, the management terminal 300 is connected to the in-arcade server via the intranet, and is also connected to the application server via the Internet.

The in-arcade server, the management terminal 300, and personal terminals of players (not shown) are connected to the application server via the Internet. The in-arcade server functions as an arcade management server that manages communication between casings of the plurality of crane game devices 101 installed in the arcade. The plurality of crane game devices 101 is wirelessly connected to the in-arcade server via the communication network 102 (Intranet). Therefore, the management terminal 300 and the in-arcade server are each provided with a communication unit for the intranet and the Internet.

Each crane game device 101 transmits the state information to the in-arcade server. The in-arcade server transmits the state information of each crane game device 101 to the application server via the Internet. The application server stores the received state information in the database. Furthermore, the application server performs various processes using the state information stored in the database.

The operator in the Akihabara arcade presses the selection button 613 on which a name of the state information is written on the management image 600 displayed on the management terminal 300 held by the operator. In this case, the management terminal 300 transmits an instruction signal to the application server. The application server acquires the state information corresponding to the received instruction signal from the database and generates the management image 600. The generated management image 600 is transmitted to the management terminal 300. Accordingly, the operator can check the state information using the management image 600 transmitted from the application server.

In addition, the in-arcade server may also include the data storage unit 230. Furthermore, the data storage unit 230 of the in-arcade server may register the radio signal strength at the time of wireless connection for each crane game device 101. When the operator presses the "radio signal strength" selection button 613f on the management image 600, the radio signal strength received from the in-arcade server may be displayed in the map area 620. Unlike the game device management information 500, the radio signal strength registered in the data storage unit 230 of the in-arcade server does not have to be saved for each business day. In addition, the radio signal strength of the data storage unit 230 may be updated at predetermined time intervals and may continue to be overwritten such that the latest information is always stored.

In the present embodiment, it has been described that, in the second display mode, the sales and sales achievement rates for each booth are shown in the second information display area 625 of the second icon 623. As the modified example, the second information display area 625 may display the number of remaining coins (number of unplayed times). Furthermore, when the operator presses an information switching button (not shown) on the management image 600, the second information display area 625 may display the sales and sales achievement rate of each booth or the number of remaining coins by switching the same. Even in this case, the second information display area 625 is colored in accordance with the sales achievement rate in a gauge format.

### REFERENCE SIGNS LIST

100 Game system, 101 Crane game device, 102 Communication network, 200 Server, 210 Communication unit, 211 Transmission unit, 212 Reception unit, 220 Data processing unit, 221 Data registration unit, 222 State evaluation unit, 223 Management information generating unit, 224 Signal generating unit, 230 Data storage unit, 300 Management terminal, 310 User interface processing unit, 311 Input unit, 312 Output unit, 320 Data processing unit, 330 Communication unit, 331 Transmission unit, 332 Reception unit, 340 Data storage unit, 400 Arcade interior diagram, 500 Game device management information, 600 Management image, 610 Selection area, 611 Play data field, 612 Target period field, 613 Selection button, 620 Map area, 621 First icon, 622 Information display area, 623 Second icon, 624 First information display area, 625 Second information display area, 626 Counter, 627 Marker, 630 Menu area, 631 Options

## Claims

1. A game system comprising:
a reception unit that receives a plurality of types of state information of a game device from each of a plurality of game devices; and
a management image generating unit that generates a management image by adding the state information of each of the plurality of game devices to a map image indicating a layout of the plurality of game devices in an arcade,
wherein, when a change in display is instructed by an operator, the management image generating unit changes the state information to be displayed on the management image from among the plurality of types of state information.

2. The game system according to claim 1, wherein the management image generating unit changes a color of a part or the whole of an object corresponding to the game device in the management image, according to a communication state value, included among the plurality of types of state information, that indicates one or both of a communication failure rate of the game device and a radio signal strength at a position of the game device.

3. The game system according to claim 1, wherein the management image generating unit adds, to the management image as one type of the state information, an achievement rate for a target sales value in a specified period with respect to each of the plurality of game devices.

4. The game system according to claim 1, wherein the game device is a crane game device, the game system further comprising a data storage unit that accumulates the plurality of types of state information collected from a plurality of crane game devices, and
the management image generating unit adds, to the management image as one type of the state information, a total number of plays and a total number of prizes dispensed from each of the plurality of crane game devices in a specified period.

5. The game system according to claim 1, wherein the reception unit receives play information indicating a real-time play state of the game device as one type of the state information of the game device, and
the management image generating unit adds, to the management image, play information of each of the plurality of game devices.

6. The game system according to claim 1, wherein the management image generating unit adds, to the management image, an elapsed time after a predetermined end condition has been satisfied in the game device, and updates a display of the elapsed time until a new play is started in the game device.

7. The game system according to claim 1, wherein the management image generating unit adds, to an object corresponding to a game device instructed by the operator, a mark indicating that the game device is a specified model.

8. A communication terminal comprising:
a reception unit that receives, from a game management device, a layout of a plurality of game devices in an arcade and a management image indicating first state information of each of the plurality of game devices;
a display unit that displays, on a screen, the received management image indicating the first state information;
an input unit that receives a display change instruction from an operator; and
a transmission unit that notifies the game management device of a change request indicating the display change instruction,
wherein the reception unit receives, from the game device, the management image indicating the first state information of each of the plurality of game devices after the change request is transmitted, and
the display unit changes the first state information displayed on the management image to second state information when a management image indicating the second state information is received.
